# EUROPÄISCHE PATENTSCHRIFT

(11) **EP 2 791 069 B1**
(45) Veröffentlichungstag und Bekanntmachung des Hinweises auf die Patenterteilung: **02.08.2017**
(21) Anmeldenummer: 12806426.8
(22) Anmeldetag: 13.12.2012
(51) Int. Cl.: C03B 19/14, C03B 20/00

(54) **VERFAHREN ZUR HERSTELLUNG VON SYNTHETISCHEM QUARZGLAS**
METHOD FOR PRODUCING SYNTHETIC QUARTZ GLASS
PROCÉDÉ DESTINÉ À FABRIQUER DU VERRE DE QUARTZ SYNTHÉTIQUE

(30) Priorität: 16.12.2011 DE 102011121190
(43) Veröffentlichungstag der Anmeldung: 22.10.2014
(73) Patentinhaber: Heraeus Quarzglas GmbH & Co. KG, 63450 Hanau (DE)
(72) Erfinder: BADEKE, Klaus-Uwe, 06193 Götschetal (DE); OTTO, Norbert, 06179 Teutschenthal (DE); TROMMER, Martin, 06749 Bitterfeld (DE); LAUDAHN, Hilmar, 06766 Bitterfeld-Wolfen (DE); BRUECKEL, Andreas, 06766 Bitterfeld-Wolfen (DE)
(74) Vertreter: Staudt, Armin Walter
(86) Internationale Anmeldenummer: PCT/EP2012/075346
(87) Internationale Veröffentlichungsnummer: WO 2013/087751

(56) Entgegenhaltungen:
- EP-B1- 0 463 045
- JP-A- 2000 017 438
- US-A- 5 707 415
- US-B1- 6 244 575

## Beschreibung

Die Erfindung betrifft ein Verfahren zur Herstellung von synthetischem Quarzglas, umfassend die Verfahrensschritte:
(A) Bereitstellen eines flüssigen SiO₂-Einsatzmaterials, welches mehr als 70 Gew.% Octamethylcyclotetrasiloxan aufweist,
(B) Verdampfen des flüssigen SiO₂-Einsatzmaterials in einen gasförmigen SiO₂ Einsatzdampf, umfassend eine Injektionsphase in einer Expansionskammer, in der das SiO₂-Einsatzmaterial in feine Tröpfchen atomisiert wird, wobei die Atomisierung der Tröpfchen in einem Trägergasstrom stattfindet,
(C) Umsetzen des SiO₂-Einsatzdampfes zu SiO₂ Partikeln,
(D) Abscheiden der SiO₂ Partikel auf einer Ablagerungsfläche unter Bildung eines SiO₂ Sootkörpers,
(E) Verglasen des SiO₂-Sootkörpers unter Bildung des synthetischen Quarzglases.

### Stand der Technik

Zur Herstellung von synthetischem Quarzglas für kommerzielle Anwendungen werden chlorfreie Einsatzmaterialien erprobt. Als Beispiel seien Monosilane, Alkoxysilane und Siloxane genannt. Eine besonders interessante Gruppe chlorfreier Einsatzmaterialien bilden die Polyalkylsiloxane (auch kurz als "Siloxane" bezeichnet), die beispielsweise aus der EP 463 045 A1 bekannt sind. Die Stoffgruppe der Siloxane lässt sich unterteilen in offenkettige Polyalkylsiloxane und in geschlossenkettige Polyalkylsiloxane. Die Polyalkylsiloxane haben die allgemeine Summenformel SiₚOₚ(R)_{2P}, wobei P eine ganze Zahl ≥ 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Wegen der großtechnischen Verfügbarkeit in hoher Reinheit wird derzeit Octamethylcyclotetrasiloxan (OMCTS) bevorzugt eingesetzt. Diese Substanz wird gemäß einer von General Electric Inc. eingeführten Notation auch als "D4" bezeichnet, wobei "D" die Gruppe [(CH₃)₂Si]-0- repräsentiert.

Das siliziumhaltige Einsatzmaterial kann dem Verbraucher, wie etwa einem Abscheidebrenner, in flüssiger Form zugeführt werden. In der Regel wird das flüssige Einsatzmaterial aber mittels eines Verdampfers in eine gasförmige oder dampfförmige Phase überführt und dem Verbraucher ein kontinuierlicher Gasstrom zugeführt. Bei den bekannten Verdampfungssystemen wird die zu verdampfende Flüssigkeit mit einer heißen Oberfläche in Kontakt gebracht. Heiße Oberflächen können insbesondere bei organischem Einsatzmaterial zu unvorhergesehenen Veränderungen führen, wie beispielsweise Zersetzungen oder Polymerisationen.

Aus US 5 707 415 A ist ein Verfahren zur Herstellung von synthetischem Quarzglas durch Abscheiden von SiO₂ Sootmaterial mit OMCTS (Octamethylcyclotetrasiloxan) als SiO₂ Einsatzmaterial bekannt. Flüssiges OMCTS wird in einen Verdampfer eingespritzt und zu kleinen Tröpfchen atomisiert. Die Tröpfchen werden anschließend mit Sauerstoff als Trägergas vermischt. Durch eine spezielle Konstruktion des Verdampfers wird die störende Polymerisation des OMCTS bzw. etwaige Ablagerungen der Polymerisate verhindert.

Weiterhin ist aus US 6 244 575 B1 ein Verdampfer für flüssige Einsatzmaterialien zur Abscheidung von SiO₂ Schichten mittels CVD-Verfahren bekannt. Gemäß dieser Druckschrift wird TEOS (Tetraethoxysilan), -nicht OMCTS-, zu feinen Tröpfchen atomisiert, die einen Durchmesser von kleiner 100 µm haben, bevorzugt einen Durchmesser von etwa 20 µm. Die Temperatur des Trägergases hängt u.a. von der Temperatur und der Art des SiO₂ Einsatzmaterials ab und liegt bevorzugt im Bereich zwischen 30°C und 250°C.

### Technische Aufgabenstellung

Die Zersetzungsprodukte beziehungsweise Polymerisate verursachen Ablagerungen in Leitungssystemen und führen letztendlich zu kaum kontrollierbaren und nicht reproduzierbaren Prozessbedingungen. Daraus ergibt sich eine gewisse Variabilität und Unreproduzierbarkeit in der Prozessführung, die zu Fehlern im Partikelbildungsprozess und zu Inhomogenitäten im Sootaufbau führen kann.

Es ist die Aufgabe der vorliegenden Erfindung, ein Verfahren zur Herstellung von SiO₂-Sootkörpern mit hoher Materialhomogenität zu schaffen, bei dem die genannten Nachteile vermieden werden.

### Allgemeine Beschreibung der Erfindung

Zur Lösung dieser Aufgabe wird erfindungsgemäß vorgeschlagen, dass die Tröpfchen einem mittleren Durchmesser von weniger als 5 µm aufweisen und während der Atomisierung mit dem Trägergasstrom im Molverhältnis Trägergas/SiO₂-Einsatzmaterial >= 1,5 vermischt werden, wobei der Trägergasstrom auf eine Temperatur von mehr als 180°C vorgewärmt ist.

Beim erfindungsgemäßen Verfahren zur Herstellung von synthetischem Quarzglas ist vorgesehen, dass die feinen Tröpfchen des atomisierten SiO₂-Einsatzmaterials einen mittleren Durchmesser von weniger als 5 µm aufweisen, und während der Atomisierung mit dem Trägergasstrom im Molverhältnis Trägergas/SiO₂-Einsatzmaterial >= 1,5 vermischt werden, wobei die Atomisierung der Tröpfchen in einem vorgewärmten Trägergasstrom stattfindet, der eine Temperatur von mehr als 180°C aufweist.

Im Rahmen des erfindungsgemäßen Verfahrens soll ein flüssiges SiO₂-Einsatzmaterial in einen SiO₂-Einsatzdampf umgewandelt werden. Dabei weist der SiO₂-Einsatzdampf vorrangig Polyalkylsiloxane auf, bevorzugt besteht der SiO₂-Einsatzdampf aus Polyalkycyclosiloxanen, besonders bevorzugt enthält der SiO₂-Einsatzdampf als Hauptkomponente D4. Um homogene Sootkörper zu erlangen muss eine Polymerisation der Polyalkylsiloxane im Rahmen des Verdampfens verhindert werden. Dieses kann mit dem erfindungsgemäßen Verfahren erreicht werden.

Es wird ein Verdampfungsverfahren gezeigt, welches insbesondere für die kontinuierliche Verdampfung von Polyalkylsiloxanen, insbesondere OMCTS (=D4) über Zeiträume von > 10 h im Batchbetrieb bei hohen Verdampfungsraten von > 20 kg/h eine im Verdampfer annähernd rückstandsfreie Verdampfung ohne die Bildung von störenden polymeren Folgeprodukten ermöglicht. Kritisch dabei ist, dass die zu verdampfende Flüssigkeit bzw. Flüssigkeitströpfchen während der Verdampfung nicht oberhalb ihrer Verdampfungstemperatur erhitzt werden. Dazu soll einerseits eine Zerstäubung der Flüssigkeit in sehr kleine Flüssigkeitstropfen mit einer hohen Oberfläche erreicht werden, um so eine möglichst große Oberfläche für die Wärmeübertragung zu generieren. Andererseits soll eine sehr kurze Verweilzeit des SiO₂-Einsatzmaterials im Verdampfungsreaktor (auch als Verdampfer bezeichnet) realisiert werden, um so eine möglichst kurze Reaktionszeit des Siloxans im Verdampfer zu haben. Bei einer sehr kurzen mittleren Verweilzeit im Verdampfungsreaktor (< 2 Sekunden) können unter diesen Bedingungen die Trägergastemperatur und die Oberflächentemperatur im Verdampfungsreaktor auch oberhalb des Siedepunktes der zu verdampfen Flüssigkeit liegen, da die Flüssigkeitströpfchen bei der Phasenumwandlung (flüssig - dampfförmig) gleichzeitig eine Abkühlung erfahren.

Wesentliche Idee ist es, dass die zu verdampfende Flüssigkeit in feinste Tröpfchen überführt (=als vernebelt oder zerstäubt oder atomisiert bezeichnet) wird und quasi "in situ" während der Atomisierung mit einem stark vorgewärmten Trägergasstrom mit einer Temperatur von mehr als 180°C, insbesondere mehr als 230°C im Molverhältnis Trägergas/Siloxan >= 1,5 (bevorzugt im Molverhältnis von mehr als 2,5, insbesondere mehr als 3) vermischt werden. Die feinsten Flüssigkeitstropfen (< 10 micron) nehmen die Wärme vom vorgeheitzten Trägergas über die äußere Oberfläche auf und eine erste Schicht der äußeren Oberfläche des Tröpfchens verdampft und bildet um das Tröpfchen einen dünnen Dampffilm aus. Die von einem Dampffilm umgebenen Flüssigkeitströpfchen werden direkt in einen Verdampfungsreaktor transportiert und dort komplett verdampft. Dadurch dass die Flüssigkeitströpfchen von einem dünnen Dampffilm mit hoher Dampfkonzentration umgeben sind, kann die flüssige Phase des Flüssigkeitströpfchen (= innere, noch unverdampfte Bereich des Tröpfchens) zu keiner Zeit direkten Kontakt zur Innenwandung des Verdampfer des Wärmetauschers bekommen. Damit wird verhindert, dass die flüssige Phase des Flüssigkeitstropfens in direkten Kontakt zur Metalloberfläche des Verdampfungsreaktors kommt.

In einer vorteilhaften Ausgestaltung wird das erfindungsgemäße Verfahren in einem Verdampfer umgesetzt. Dieser Verdampfer - auch als Verdampfungskammer bezeichnet - weist zwei Zonen auf. Die erste Zone ist die Atomisierungszone, in welcher das flüssige SiO₂-Einsatzmaterial in feine Tropfen überführt wird. Dieser auch als Atomisierung bezeichnete Vorgang umfasst ein Zerstäuben der Flüssigkeit in Tropfen, deren Durchmesser kleiner als 2 µm (1 µm = 1 micron), bevorzugt kleiner als 0,5 µm ist. Weiterhin findet in dieser ersten Zone ein Vermischen der Tropfen mit einem Trägergas statt. Die Besonderheit des erfindungsgemäßen Verfahrens besteht darin, dass das Trägergas vorgeheizt ist. Im Stand der Technik ist es bekannt, Trägergas zu nutzen, welches Zimmertemperatur (ca. 10°C bis ca. 40°C) aufweist. Abweichend davon wird im erfindungsgemäßen Verfahren ein stark aufgeheiztes Trägergas mit einer Temperatur von mehr als 180°C, bevorzugt mehr als 230°C genutzt, um die Atomisierung zu unterstützen. Folglich dient das Trägergas zum einen als Träger der Tropfen an sich. Gleichzeitig setzt das Trägergas den Taupunkt des eingesetzten SiO₂-Einsatzmaterials herab und sorgt so für einen schnelleren Übergang aus der Flüssig- in die Gas-Phase. Weiterhin dient das stark aufgeheizte Trägergas dazu, in einem kurzen Zeitintervall einen ersten Energieeintrag in das flüssige SiO₂-Einsatzmaterial sicherzustellen. Die Nutzung von sehr stark erhitztem Trägergas hat gegenüber der im Stand der Technik bekannten Nutzung von kaltem Trägergas eine Vielzahl von Vorteilen. Zum einen bedarf es keiner Vorheizung des flüssigen Si02-Einsatzmaterials. Dieses kann direkt und kalt - als nicht aufgeheizt - aus einem Vorratsbehälter entnommen werden. Dadurch ist es möglich, Flüssigkeitsdurchflussmesser zu nutzen, um die dem Verdampfer zugefügte Menge des SiO₂-Einsatzmaterials zu bestimmen. Solche Art Flüssigkeitsdurchflussmesser arbeiten maximal bis Temperaturen von 80°C. Durch die Nutzung von flüssigem Si02-Einsatzmaterial, welches maximal eine Temperatur von maximal 60°C, bevorzugt weniger als 50°C besonders bevorzugt weniger als 40°C aufweist, können die dem Verdampfer zugefügten flüssigen Mengen präzise mit dem Flüssigkeitsdurchflussmesser bestimmt werden. Dieses ist günstig für reproduzierbare Prozessbedingungen. Die so entstehenden Gele können bei solcher Art hohen Durchsätzen, wie sie mit dem hier offenbarten Verfahren bewerkstelligt werden sollen, zu Verstopfungen bzw. Quersschnittsverengungen der Zuleitungen etc. führen. Dieses wiederum beeinflusst die Druck- und Strömungsverhälntisse in der Dampfleitung. Da im hier offenbarten Verfahren das SiO2-Einsatzmaterial - insbesondere die Polyalkylsiloxane - in der Zuleitung im flüssigen Zustand auf bevorzugt weniger als 40°C aufgeheizt werden, besonders bevorzugt auf Raumtemperatur gehalten werden, findet keinerlei Polymerisation mehr statt. Folglich ergeben sich keine Verstopfungen der Zuleitungen und/oder am Flüssigkeitsdurchflussmesser.

Nachdem in der ersten Zone des Verdampfers eine Atomisierung des SiO₂-Einsatzmaterials und eine Vermischung mit dem heißen Trägergas stattgefunden hat, strömt dieses Gemisch in die zweite Zone des Verdampfers ein. Die zweite Zone - auch als Wärmetauscherzone und/oder Wärmetauscher bezeichnet - dient zur weiteren Energiezufuhr und damit zur weiteren Verdampfung. Durch die Nutzung eines heißen Trägergases ist die in der zweiten Zone benötigte Energiezufuhr geringer als im Stand der Technik. Darüber hinaus dient die bei der schlagartigen Verdampfung in dem Atomisierer - auch als Atomisator bezeichnet - entstehende Dampfschutzschicht um das Tröpfchen als eine Art Schild gegen einen direkten Kontakt der Flüssigkeit im Tröpfchen mit der Wandung und/oder innerer Kanäle der zweiten Zone. Dadurch wird eine Polymerisation des flüssigen SiO₂-Einsatzmaterials in den Tröpfchen verhindert.

Die Dampfschutzschicht ummantelt das flüssige SiO₂-Einsatzmaterial in dem Tröpfchen. Es wirkt als eine Abschirmung der Flüssigkeit gegenüber äußeren Einflüssen. Vorteilhafterweise hat sich herausgestellt, dass Energieeinträge durch diese Dampfschicht besonders schnell in das flüssige SiO₂-Einsatzmaterial eindringen können. Folglich unterstützt die Dampfschutzschicht das Verdampfen des flüssigen SiO₂-Einsatzmaterials in dem Tröpfchen. Diese Erkenntnis begründet, warum bei einer Annäherung des Tröpfchens an eine aufgeheizte Wandung in der zweiten Zone kein direkter Kontakt zwischen dem flüssigen Si02-Material und der zweiten Zone auftritt. Vielmehr wird die in der zweiten Zone abgestrahlte Wärme von der Dampfschutzschicht aufgenommen und auf das flüssige Si02-Einsatzmaterial derart konzentriert, dass eine schnelle Verdampfung stattfindet. Somit findet kein direkter Kontakt zwischen dem flüssigen SiO₂-Einsatzmaterial und Wänden oder Kanälen der zweiten Zone statt. Dadurch wird die Neigung der Polyalkylsiloxane zur Polymerisation deutlich reduziert. Insgesamt wird also die Innenfläche des Verdampfers sowie auch alle ableitenden Kanäle aus dem Verdampfer heraus deutlich weniger als im Stand der Technik mit polymerisierten Resten der Polyalkylsiloxane beaufschlagt.

Um die Chancen eines direkten Kontaktes des flüssigen SiO₂-Einsatzmaterials mit Innenwänden oder Kanälen des Wärmetauschers - also der zweiten Zone - zu reduzieren, hat es sich als vorteilhaft erwiesen, wenn die Zeitspanne, die vom Einspeisen des flüssigen SiO₂-Einsatzmaterials in den Atomisator bis zum Austritt des gasförmigen SiO₂-Einsatzdampfes möglichst kurz ist. Vorteilhafterweise beträgt die mittlere Verweilzeit weniger als eine Sekunde.

So kann die Oberflächentemperatur des Verdampfungsreaktors in der zweiten Zone mindestens 10°C oberhalb des Taupunktes des Gasgemisches liegen. Durch den schützenden Dampffilm um das Tröpfchen herum wird ein direkter Wandkontakt der flüssigen Phase und damit auch eine Überhitzung der flüssigen Phase vermieden. Damit wird das Risiko für eine partielle Polymerisation des Siloxans in der zweiten Zone des Verdampfers vermieden.

Weiterhin kann die mittlere Verweilzeit der Dampfmoleküle im Verdampfervolumen des Verdampfers weniger als 2 Sekunden, bevorzugt weniger als 1 Sekunden, noch bevorzugter weniger als 0,5 Sekunde betragen.

Eine vorteilhafte Ausgestaltung des Verfahrens zeichnet sich dadurch aus, dass der Verdampfer eine erste Zone und eine zweite Zone aufweist. Dabei weist die erste Zone die Zerstäubungseinheit und die zweite Zone den Wärmetauscher auf.

Eine vorteilhafte Ausgestaltung des Verfahrens zeichnet sich dadurch aus, dass in der Zerstäubungseinheit (Atomisierungseinheit) aus dem flüssigen SiO₂-Einsatzmaterial feine Tröpfchen generiert werden (z. B. Düse, Ultraschallzerstäubung) mit einer mittleren Tröpfchengröße von weniger als 2 micron.

Eine vorteilhafte Ausgestaltung des Verfahrens zeichnet sich dadurch aus, dass das Trägergas insbesondere Stickstoff oder Argon oder Helium aufweist und eine Temperatur von mehr als 200°C, besonders bevorzugt eine Temperatur von mehr als 230°C bis maximal 350°C aufweist.

Eine vorteilhafte Ausgestaltung des Verfahrens zeichnet sich dadurch aus, dass sich durch den Energieeintrag des Trägergases um die atomisierten Tröpfchen eine über der Oberfläche des Tröpfchens partielle Tröpfchenverdampfung einsetzt und sich so um die Oberfläche des Tröpfches ein Dampffilm ausbildet.

Eine vorteilhafte Ausgestaltung des Verfahrens zeichnet sich dadurch aus, dass die vom dem Dampffilm umgebenen flüssige Phase des Tröpfchens aufgrund des Dampffilmes keinen direkten Kontakt zu beheizten Elementen in der zweiten Zone und/oder der Wärmetauschereinheit erfahren, so dass eine Benetzung von Flüssigkeitstropfen an den Wänden innerhalb des Vedampfers ausgeschlossen wird.

Eine vorteilhafte Ausgestaltung des Verfahrens zeichnet sich dadurch aus, dass mindestens 7,5% der eingetragenen Energie durch das Trägergas zur Verdampfung des Siloxans beiträgt.

Eine vorteilhafte Ausgestaltung des Verfahrens zeichnet sich dadurch aus, dass die Oberflächentemperatur des Wärmetauschers oberhalb des Siedepunktes des zuverdampfenden Siloxans liegt.

Eine vorteilhafte Ausgestaltung des Verfahrens zeichnet sich dadurch aus, dass die mittlere Verweilzeit des Siloxans im Verdampfer < 5 Sekunden, bevorzugt < 1 Sekunde beträgt.

Eine vorteilhafte Ausgestaltung des Verfahrens zeichnet sich dadurch aus, dass das Verhältnis von generiertem Dampfvolumen pro Sekunde (OMCTS + Trägergas bei der Dampfaustrittstemperatur) und innerem Volumen der Verdampfungskammer > 0,5, bevorzugt > 1 beträgt.

Der Verdampfer kann sowohl senkrecht als auch horizontal ausgerichtet sein. Das Prinzip des Verdampfers ist es, aufgrund der sehr kleinen Tröpfchengröße in Kombination mit eine hohen Wärmeübertragung, hohen Strömungsgeschwindigkeiten als auch kurzen Verweilzeiten eine unmittelbare Untersättigung des Dampfdruckes der Flüssigkeit (Überschreitung des Taupunktes) zu erreichen. Dadurch bilden sich keine störenden Kondensatröpfchen mehr aus. Eine bevorzugte Ausrichtung des Verdampfers ist daher nicht erforderlich.

### Ausführungsbeispiel

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen:
- **Figur 1**: eine Vorrichtung zur Durchführung des erfindungsgemäßen Verfahrens zur Herstellung eines SiO₂-Sootkörpers in schematischer Darstellung,
- **Figur 2**: ein schematisches Diagramm der verschiedenen Elemente des erfindungsgemäßen Quarzglasherstellungssystems und
- **Figur 3**: eine weitere schematische Darstellung einer Verdampfungskammer.

Der Ausgangspunkt des erfindungsgemäßen Verfahrens ist dabei die Bildung eines Gasstromes aus einem SiO₂-Einsatzdampf 107, der als Hauptkomponente D4 enthält. Der Gasstrom wird einer Reaktionszone zugeführt, in der der SiO₂-Einsatzdampf unter Bildung amorpher SiO₂-Partikel durch Pyrolyse, Oxidation oder Hydrolyse zu SiO₂ umgesetzt wird. Das sich anschließende Abscheiden der amorphen SiO₂-Partikel auf einer Ablagerungsfläche 160 führt zur Bildung eines porösen SiO₂-Sootkörpers 200, der durch Verglasung ein synthetisches Quarzglas bildet. Um dabei die Herstellung von großvolumigen zylinderförmigen Sootkörpern 200 mit Außendurchmessern von mehr als 300 mm mit verbesserter Materialhomogenität zu ermöglichen, offenbart die Erfindung, dass das Verdampfen des erhitzten SiO₂-Einsatzmaterials eine Injektionsphase in einer Expansionskammer umfasst, in der das SiO₂-Einsatzmaterial - insbesondere in flüssiger Form - in feine Tröpfchen zerstäubt wird, wobei die Tröpfchen einem mittleren Durchmesser von weniger als 5 µm, vorzugsweise weniger als 2 µm, aufweisen.

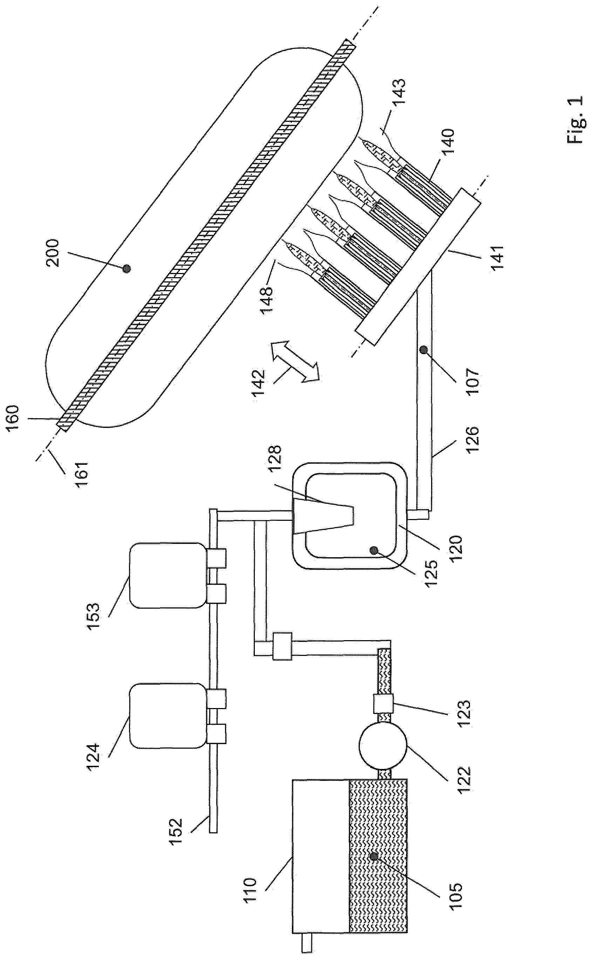

Die in **Figur 1** dargestellte Vorrichtung dient zur Herstellung eines SiO₂-Sootkörpers 200. Entlang eines Trägerrohres 160 aus Aluminiumoxid ist eine Vielzahl in einer Reihe angeordneter Flammhydrolysebrenner 140 angeordnet. Bei einer auf höhere Produktivität abzielenden Verfahrensabwandlung wird anstelle nur eines Brenners 140 eine Vielzahl von Abscheidebrennern eingesetzt, die zur Soot-Abscheidung in einer gemeinsamen Brennerreihe entlang des rotierenden Trägers reversierend hin- und herbewegt werden, wobei jede der Brennerflammen nur eine Teillänge des Trägerrohres 160 überstreicht.

Das SiO₂-Einsatzmaterial 105 weist vorzugsweise mehr als 95 Gew.%, bevorzugt mehr als 98 Gew.%, insbesondere mehr als 99,5 Gew.% des Polyalkylsiloxanes D4 auf und wird der Reaktionszone in gasförmiger Form zugeführt und dabei durch Oxidation und/oder Hydrolyse und/oder Pyrolyse zu SiO₂ zersetzt. Die Reaktionszone ist beispielsweise eine Brennerflamme oder ein Plasma. In der Reaktionszone entstehen SiO₂-Partikel 148, die unter Bildung des SiO₂-Sootkörpers 200 auf der Ablagerungsfläche 160 schichtweise niedergeschlagen werden. Die SiO₂-Partikel 148 selbst liegen in Form von Agglomeraten oder Aggregaten von SiO₂-Primärpartikeln mit Partikelgrößen im Nanometerbereich vor.

Die Flammhydrolysebrenner 140 sind auf einem gemeinsamen Brennerblock 141 montiert, der parallel zur Längsachse 161 des Trägerrohrs 160 zwischen zwei, in Bezug auf die Längsachse 161 ortsfesten Wendepunkten hin- und herbewegt wird und der senkrecht dazu verschiebbar ist, wie dies die Richtungspfeile 142 andeuten. Die Brenner 140 bestehen aus Quarzglas; ihr Mittenabstand zueinander beträgt 15 cm.

Den Flammhydrolysebrennern 140 ist jeweils eine Brennerflamme 143 zugeordnet, die eine Reaktionszone im Sinne der Erfindung darstellt. In ihr werden SiO₂-Partikel gebildet und auf der Zylindermantelfläche des um seine Längsachse 161 rotierenden Trägerrohrs 160 abgeschieden, so dass schichtweise ein Sootkörper 200 mit einem Außendurchmesser von 350 mm aufgebaut wird. Während des Abscheideprozesses stellt sich auf der Sootkörperoberfläche 200 eine Temperatur von etwa 1200°C ein. Den Flammhydrolysebrennern 140 werden jeweils als Brennergase Sauerstoff und Wasserstoff zugeführt sowie als Einsatzmaterial für die Bildung der SiO₂-Partikel der SiO₂-Einsatzdampf 107. Im Rahmen der Erfindung umfasst der Begriff Polyalkylsiloxane sowohl Polyalkylcyclosiloxane als auch deren lineare Homologe.

Die Herstellung des SiO₂-Einsatzdampfes 107 aus mehr als 95 Gew.%, bevorzugt mehr als 98 Gew.%, insbesondere mehr als 99,5 Gew.% des Polyalkylsiloxanes D4 erfolgt mittels eines Verdampfersystems 120, das einen Vorratsbehälter 110 für das flüssige Gemisch, eine pulsationsfreie Flüssigkeitspumpe 122, ein Durchflussmessgerät 123 für Flüssigkeit, einen MFC (mass flow controller) 124 für die geregelte Zufuhr eines Stickstoff-Trägergasstroms 152 und eine beheizbare Verdampfungskammer 125 - auch Expansionskammer - mit einer Zerstäuberdüse 128 umfasst. Der Vorratsbehälter 110, eine Pumpe 122 und eine Zerstäuberdüse 128 sind mittels metallischer Leitungen miteinander verbunden. Der Vorratsbehälter 110 wird auf eine Temperatur von 30-40°C erwärmt - auch auf Raumtemperatur gehalten - und die Flüssigkeit mittels der Pumpe 122 über das Durchflussmessgerät 123 in exakter Dosierung der Zerstäuberdüse 128 zugeführt. In und mittels der Zerstäuberdüse wird das SiO₂-Einsatzmaterial 105 in feine Tröpfchen - auch als SiO₂-Tröpfchen bezeichnet- zerstäubt - auch als atomisiert bezeichnet - , wobei die SiO₂-Tröpfchen einen mittleren Durchmesser von weniger als 5 µm, vorzugsweise weniger als 2 µm, aufweisen. Dabei kann in der Verbindungsleitung zwischen Durchflussmessgerät 123 und Zerstäuber 128 ein Konzentrationsdetektor zur Überwachung der Zusammensetzung des SiO₂-Einsatzmaterials 105 und/oder des SiO₂-Einsatzdampfes 107 und/oder der SiO₂-Tröpfchen vorgesehen sein.

Bei dem Zerstäuber 128 - auch als Zerstäuberdüse oder Atomisierer bezeichnet - kann es sich um einen Ultraschallzerstäuber oder einen Überschallzerstäuber ("supersonic") handeln. Diese Zerstäuberdüse 128 stellt sicher, dass das flüssige SiO₂-Einsatzmaterial in feine Tröpfchen zerstäubt wird, wobei die Tröpfchen einem mittleren Durchmesser von weniger als 5 µm, vorzugsweise weniger als 2 µm, aufweisen. Je nach Ausgestaltung kann dem SiO₂-Einsatzmaterials 105 und/oder den Tröpfen ein Stickstoff-Trägergasstrom über den MFC 123 mit einem Druck von 1,5 bar bis 5 bar zugeführt werden.

In einer vorteilhaften Ausführungsform zerstäubt die Zerstäuberdüse 128 zusammen mit einem separat eingespeistem und auf mehr als 200 °C vorgewärmten Trägergas das SiO₂-Einsatzmaterials 105 in feine Tröpfchen mit einem maximalen Durchmesser von 5 µm und schmaler Tröpfchengrößenverteilung mit einem mittleren Durchmesser (d₅₀-Wert) von 0,9 µm, und sprüht unmittelbar danach diese Tröpfchen in der Injektionsphase in die nachgeschaltete Wärmetauscherzone 220 des Verdampfers 120 ein. Der Verdampfer 120 hat eine Innentemperatur von bis zu 300°C, so dass die feinen Flüssigkeitstöpfchen unmittelbar verdampfen und der Dampfstrom einem Flussteiler zugeführt und von diesem über wärmeisolierte flexible Medienzufuhrleitungen auf die einzelnen Abscheidebrenner 140 aufgeteilt wird. Das Trägergas wird in einem Vorheizer 153 aufgeheizt. Dabei wird das Trägergas auf Temperaturen jenseits von 200°C erwärmt.

In den Flussteiler münden auch eine Zufuhrleitung für die Brenngase Sauerstoff und Wasserstoff sowie eines Hilfsgases (Sauerstoff), das in der Brennerflamme 143 zwischen dem Strom des Einsatzmaterials und dem Strom des Brenngases eingesetzt wird, und das einer frühzeitigen Durchmischung entgegenwirkt. Die Mischung von Brenngasen und dem SiO₂-Einsatzdampf 107 erfolgt somit erst in der heißen Zone der Brennerflamme 143. Nach Abschluss des Abscheideprozesses wird ein Rohr aus porösem SiO₂-Soot (Sootrohr) erhalten.

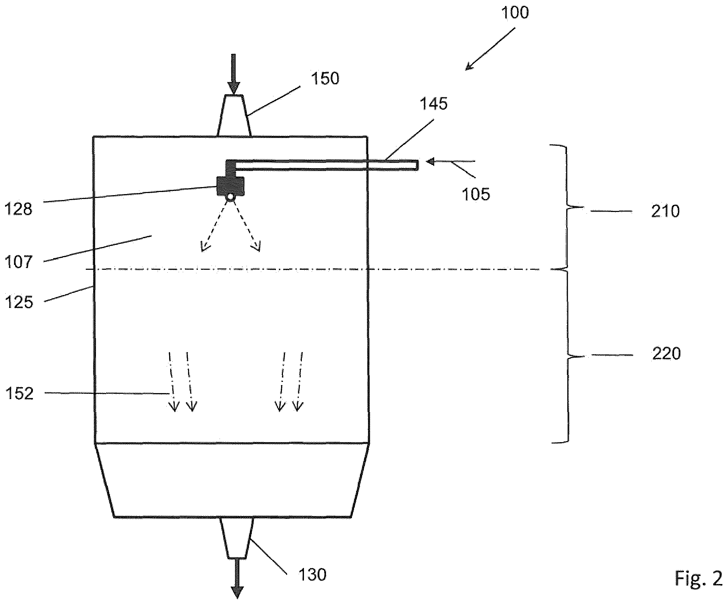

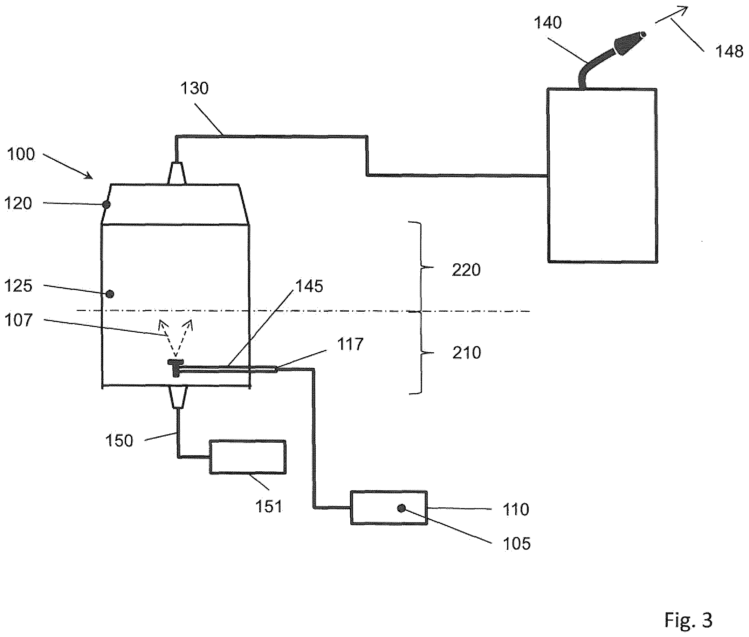

Die **Figuren 2** **und** **3** zeigen das System 100 zur Herstellung von Quarzglas, welches das erfindungsgemäße Verfahren nutzt. Dabei findet eine die Zerstäubung des SiO₂-Einsatzmaterials 105 mittels einer Zerstäuberdüse 128 statt (z. B. Überschallzerstäubung). Das System 100 weist dazu einen Vorratstank 110 auf, aus dem das flüssige SiO₂-Einsatzmaterial 105 mittels einer Pumpe 122 in die Zerstäuberdüse gepumpt wird. In einer Expansionskammer 125 findet der Übergang der flüssigen SiO₂-Tröpfchen in den gasförmigen SiO₂-Einsatzdampf 107 statt. Dabei umfasst definitionsgemäß die Expansionskammer 125 eine erste Zone 210 und eine zweite Zone 220. Somit umfasst die Expansionskammer 125 das gesamte innere Volumen des Verdampfers - also der Atomisierungszone und der Wärmetauscherzone. In der ersten Zone 210 der Expansionskammer 125 findet das Zerstäuben der Flüssigkeit - auch als Atomisieren bezeichnet - und das gleichzeitige Vermischen mit dem stark vorgewärmten Trägergas statt sowie der Transport der Tröpfchen in die zweite Zone 220 der Expansionskammer 125. Über eine Leitung 130 strömt der SiO₂-Einsatzdampf 107 zu dem Brenner 140, wo eine pyrolytische und/oder hydrolytische Umsetzung des SiO₂-Einsatzdampfes in SiO₂-Partikel erfolgt.

Innerhalb des Vorratsbehälters 110 findet eine Erwärmung des SiO₂-Einsatzmaterials 105 auf Temperaturen deutlich unterhalb des Siedepunkts, vorzugsweise auf Raumtemperatur, des SiO₂-Einsatzmaterials statt. Dieses kann durch die Verwendung eines Heißölsystems oder eines elektrischen Heizelementes in den Wänden der Vorheizeinrichtung erfolgen. Um eine gleichmäßige Aufheizung des flüssigen SiO₂-Einsatzmaterials 105 unter Vermeidung heißer Bereiche zu erzielen, hat es sich als vorteilhaft erwiesen, wenn der Vorratsbehälters 110 einen Strömungskanal aufweist, welcher von Heißölkanälen umgeben ist. Der so realisierbare flüssig-zu-flüssig Hitzetransfer erzielt eine gleichmäßige Erhitzung des flüssigen SiO₂-Einsatzmateriales 105. Diese Art der gleichmäßigen Erwärmung stellt sicher, dass es nicht zu temperaturbedingten chemischen Umsetzung der Polyalkylsiloxane kommt. Das erhitzte flüssige SiO₂-Einsatzmaterial 105 wird von dem Vorratsbehälter 110 in die Expansionskammer 125 durch eine Zuführungsleitung 145 abgegeben.

Die Expansionskammer 125 - auch als Verdampferkammer bezeichnet - definiert ein Innenvolumen für die freie Ausdehnung des SiO₂-Einsatzdampfes. Um eine gleichmäßige Verdampfung der SiO₂-Tröpfchen in den gasförmigen Einsatzdampf zu erzielen, hat es sich nicht als vorteilhaft erwiesen, wenn in dem Vorratsbehälter 110 die Temperatur des flüssigen SiO₂-Einsatzmaterials über den Siedepunkt des SiO₂-Einsatzmaterials bei dem Betriebsdruck der Expansionskammer erhöht wird. Eine bevorzugte Betriebstemperatur für den Vorratsbehälter 110 liegt unterhalb 40°C, idealerweise bei Raumtemperatur (=22°C). Der Siedepunkt von D4 bei Atmosphärendruck beträgt ungefähr 175 °C. Somit wird vermieden, dass sich Gele oder Ablagerungen durch eine Polymerisation des SiO₂-Einsatzmaterials bilden.

Wie die Figur 3 verdeutlicht, fließt das flüssige SiO₂-Einsatzmaterial aus dem Vorratsbehälter 110 durch die Zuführungsleitung 145 in den Innenraum der Expansionskammer 125, ohne dass das SiO₂-Einsatzmaterial 105 auf Temperaturen von mehr als 40°C erhitzt wird. Dann findet eine Zerstäubung des SiO₂-Einsatzmaterials mittels der Zerstäuberdüse 128 statt. Ein zusätzlicher Wärmeeintrag erfolgt durch ein Trägergas, welches beispielsweise ebenfalls durch die Zerstäuberdüse 128 geführt wird.

Als Trägergas 152 - auch als Verdünnungsmittel bezeichnet - hat sich insbesondere Stickstoff als vorteilhaft erwiesen. Andere Verdünnungsmittel, wie beispielsweise Argon oder Helium, können ebenfalls verwendet werden, wenn dieses erwünscht ist. Hierbei handelt es sich um Gase, die sich in Bezug auf Polyalkylsiloxane inert verhalten, so dass Oxidations-, Polymerisations- oder Zersetzungsreaktionen zwischen der Flüssigkeit und dem Trägergas, insbesondere unter Druck und höherer Temperatur, und damit eine nicht reproduzierbare Veränderung der Zusammensetzung des Einsatzmaterials vermieden werden. Durch das Hinzuführen des Verdünnungsmittels wird der Partialdruck des flüssigen SiO₂-Einsatzmaterials - hier der Tröpfchen des SiO₂-Einsatzmaterials - in der Expansionskammer 125 vermindert und so dessen Taupunkt erniedrigt. Ziel ist es dabei, dass das Verdampfen des SiO₂-Einsatzmaterials eine Injektionsphase umfasst, in der das Einsatzmaterial in der ersten Zone in flüssiger Form in feine Tröpfchen zerstäubt wird und die feinen Tröpfchen nach dem Kontakt mit einem heißen Trägergas in der zweiten Zone - ohne Kontakt des flüssigen Kerns der Tröpfchen mit Wandungen der Expansionskammer 125 - schnell und effizient vollständig verdampft werden.

Die Fig. 3 verdeutlicht die erfindungsgemäße Verdampfung. Das aufgeheizte SiO₂-Einsatzmaterial 105 wird durch die Zuführungsleitung 145 der Expansionskammer 125 zugeführt. Am Ende der Zuführungsleitung 145 im Inneren der Expansionskammer 125 weist die Zuführungsleitung 145 einen düsenartigen Zerstäuberdüse 128 auf. Mittels der Zerstäuberdüse 128 - die vorzugsweise ein Ultraschallzerstäuber ist - wird das flüssige SiO₂-Einsatzmaterial 105 in feine Tropfen zerstäubt, welche einen mittleren Durchmesser von weniger als 5 µm, bevorzugt weniger als 2 µm, insbesondere weniger als einem µm aufweisen. Besonders bevorzugte Ergebnisse ergeben sich, wenn die mittlere Teilchengröße kleiner 0,5 µm beträgt (d₅₀-Wert). Der Medianwert oder d₅₀-Wert ist dabei als Maß für die mittlere Teilchengröße die wichtigste Kenngröße. Der d₅₀-Wert beschreibt jenen Wert, bei dem 50 Prozent der Tröpfchen feiner sind und die anderen 50% grober sind als d₅₀.

Durch den Druckabfall, der beim Austritt aus der Zerstäuberdüse 128 auftritt wird ein wesentlicher Teil der Tröpfchen in die Gasphase überführt. Zusätzlich wird durch die Medienleitung 150 ein auf ca. 180°C bis ca. 300°C vorgewärmter Stickstoffstrom in die Expansionskammer 125 und die Zerstäuberdüse 128 geleitet.

Es ist nicht vorgesehen, dass sich Teile des flüssigen SiO₂-Einsatmaterials 105 - die Tröpfchen- an den Wänden der Expansionskammer 125 niederschlagen und/oder dort thermisch verdampft werden. Durch die Leitung 130 findet der Abfluss des gasförmigen SiO₂-Einsatzdampfes 107 zu dem Brenner 140 statt. Im Brenner 140 wird der SiO₂-Einsatzdampfes 107 durch Pyrolyse, Oxidation oder Hydrolyse zu SiO₂-Partikel 148 - auch als SiO₂ oder Soot oder SiO₂-Soot bezeichnet - umgesetzt.

### Bezugszeichenliste

- 100: System
- 105: SiO₂-Einsatzmaterial
- 107: SiO₂-Einsatzdampf
- 110: Vorratstank / Vorratsbehälter
- 117: Ablauf
- 120: Verdampfer / Verdampfersystem
- 122: Flüssigkeitspumpe
- 123: Durchflussmessgerät
- 124: MFC (mass flow controller)
- 125: Expanionskammer / Verdampfungskammer
- 126: Leitung
- 127: Flussteiler
- 128: Zerstäuberdüse
- 130: Leitung
- 140: Brenner / Flammhydrolysebrenner
- 141: Brennerblock
- 142: Bewegung von 140
- 143: Brennerflamme
- 145: Zuführungsleitung
- 148: SiO₂-Soot
- 150: Medienleitung
- 151: Vorratsbehälter
- 152: Verdünnungsmittel
- 153: Vorheitzer
- 160: Ablagerungsfläche / Trägerrohr
- 161: Längsachse von 160
- 200: Sootkörper

## Patentansprüche

1. Verfahren zur Herstellung von synthetischem Quarzglas, umfassend die Verfahrensschritte:
(A) Bereitstellen eines flüssigen SiO₂-Einsatzmaterials (105), welches mehr als 70 Gew.% Octamethylcyclotetrasiloxan aufweist,
(B) Verdampfen des flüssigen SiO₂-Einsatzmaterials (105) in einen gasförmigen SiO₂ Einsatzdampf (107), umfassend eine Injektionsphase in einer Expansionskammer (125), in der das SiO₂-Einsatzmaterial (105) in feine Tröpfchen atomisiert wird, wobei die Atomisierung der Tröpfchen in einem Trägergasstrom stattfindet,
(C) Umsetzen des SiO₂-Einsatzdampfes (107) zu SiO₂ Partikeln,
(D) Abscheiden der SiO₂ Partikel auf einer Ablagerungsfläche (160) unter Bildung eines SiO₂ Sootkörpers (200),
(E) Verglasen des SiO₂-Sootkörpers unter Bildung des synthetischen Quarzglases,
**dadurch gekennzeichnet, dass** die Tröpfchen einem mittleren Durchmesser von weniger als 5 µm aufweisen und während der Atomisierung mit dem Trägergasstrom im Molverhältnis Trägergas/SiO₂-Einsatzmaterial >= 1,5 vermischt werden, wobei der Trägergasstrom auf eine Temperatur von mehr als 180°C vorgewärmt ist.

2. Verfahren nach Anspruch 1, **dadurch gekennzeichnet, dass** das SiO₂-Einsatzmaterial (105) in feine Tröpfchen atomisiert wird, wobei die Tröpfchen einem mittleren Durchmesser von weniger als 2 µm aufweisen.

## Claims

1. A method for producing synthetic quartz glass, comprising the method steps:
(A) providing a liquid SiO₂ feedstock (105) having more than 70% by wt. of Octamethylcyclotetrasiloxane,
(B) vaporizing the liquid SiO₂ feedstock (105) into a gaseous SiO₂ feedstock vapor (107), comprising an injection phase in an expansion chamber (125), in which the SiO₂ feedstock (105) is atomized into fine droplets, wherein the atomization of the droplets takes place in a carrier gas stream,
(C) converting the SiO₂ feedstock vapor (107) into SiO₂ particles,
(D) depositing the SiO₂ particles on a deposition surface (160) so as to form a SiO₂ soot body (200),
(E) vitrifying the SiO₂ soot body so as to form the synthetic quartz glass,
**characterized in that** the droplets have a mean diameter of less than 5 µm, and are mixed during atomization with the carrier gas stream in the molar ratio carrier gas/SiO₂ feedstock >= 1.5, wherein the carrier gas stream is preheated to a temperature of more than 180°C.

2. The method according to claim 1, **characterized in that** the SiO₂ feedstock (105) is atomized into fine droplets, wherein the droplets have a mean diameter of less than 2 µm.

## Revendications

1. Procédé de fabrication de verre de quartz synthétique, comprenant les étapes de procédé :
(A) fourniture d'une charge d'alimentation SiO₂ (105) liquide, laquelle présente plus de 70% en poids d'octaméthylecyclotétrasiloxane,
(B) évaporation de la charge d'alimentation SiO₂ (105) liquide en une vapeur d'alimentation SiO₂ (107) gazeuse, comprenant une phase d'injection dans une chambre d'expansion (125), dans laquelle la charge d'alimentation SiO₂ (105) est atomisée en fines gouttelettes, l'atomisation des gouttelettes ayant lieu dans un flux de gaz porteur,
(C) transformation de la vapeur d'alimentation SiO₂ (107) gazeuse en particules de SiO₂,
(D) séparation des particules de SiO₂ sur une surface de dépôt (160) avec formation d'un corps de suie SiO₂ (200),
(E) vitrification du corps de suie SiO₂ avec formation du verre de quartz synthétique,
**caractérisé en ce que** les gouttelettes présentent un diamètre moyen de moins de 5 µm et **en ce que** pendant l'atomisation, elles sont mélangées au flux de gaz porteur dans le rapport molaire gaz porteur/charge d'alimentation SiO₂ >= 1,5, le flux de gaz porteur étant préchauffé à une température de plus de 180°C.

2. Procédé selon la revendication 1, **caractérisé en ce que** la charge d'alimentation SiO₂ (105) est atomisée en fines gouttelettes, les gouttelettes présentant un diamètre moyen de moins de 2 µm.
